(19) Europäisches Patentamt
European Patent Office
Office européen des brevets

(11) Veröffentlichungsnummer: 0 069 295
B1

(12) # EUROPÄISCHE PATENTSCHRIFT

(45) Veröffentlichungstag der Patentschrift: 21.05.86

(51) Int. Cl.[4]: C 08 G 18/20, C 08 G 18/16, C 08 G 18/22, C 08 G 18/14

(21) Anmeldenummer: 82105602.5

(22) Anmeldetag: 25.06.82

(54) **Verfahren zur Herstellung von gegebenenfalls zellhaltigen Polyurethan- oder Polyurethan-Polyharnstoff-Formkörpern.**

(30) Priorität: 04.07.81 DE 3126436

(43) Veröffentlichungstag der Anmeldung: 12.01.83 Patentblatt 83/2

(45) Bekanntmachung des Hinweises auf die Patenterteilung: 21.05.86 Patentblatt 86/21

(84) Benannte Vertragsstaaten: AT BE CH DE FR GB IT LI NL SE

(56) Entgegenhaltungen:
DE - A - 1 950 262
DE - A - 2 434 185
DE - A - 2 722 514
DE - A - 2 737 671
DE - B - 2 525 017
FR - A - 2 343 766

(73) Patentinhaber: BASF Aktiengesellschaft, Carl-Bosch-Strasse 38, D-6700 Ludwigshafen (DE)

(72) Erfinder: Nissen, Dietmar, Dr., Ziegelhaeuser Landstrasse 31, D-6900 Heidelberg (DE)
Erfinder: Hickmann, Eckhard, Dr., Kantstrasse 23, D-6701 Dannstadt-Schauernheim (DE)



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Herstellung von vernetzten Kunststoffen nach dem Isocyanat-Polyadditionsverfahren ist bekannt. Nach Angaben der DE-AS 11 96 864 (US 3 099 516) werden hierzu Hydroxylgruppen aufweisende Verbindungen und Polyisocyanate in Gegenwart von Treibmitteln und Katalysatoren verschäumt. Bei geeigneter Wahl der Hydroxylgruppen aufweisenden Polyester, Polyether, Polyetherester, Polyesteramide u.a. und organischen Polyisocyanate sowie durch zusätzliche Mitverwendung von Kettenverlängerungsmitteln, wie z.B. Glykolen oder Diaminen, können nach dieser Methode sowohl elastische wie starre Polyurethane sowie alle dazwischen liegenden Modifikationen hergestellt werden.

Ein Vefahren zur Herstellung von gegebenenfalls zellhaltigen, elastischen Formkörpern mit einer geschlossenen Oberflächenschicht aus Polyurethan-Polyharnstoff-Elastomeren nach dem Prinzip der Reaktionsspritzgußtechnik wird in der DE-OS 2 622 951 (GB 1 534 258) beschrieben. Die genannten Systeme bestehen im wesentlichen aus organischen Polyisocyanaten, Polyolen, aktiven aromatischen Di- bzw. Polyaminen, die in o-Stellung zur Aminogruppe gegebenenfalls durch Alkylgruppen substituiert sind und starken Katalysatoren für die Reaktion zwischen Hydroxyl- und Isocyanatgruppen. Derartige Systeme besitzen Startzeiten bis herab zu weniger als einer Sekunde; der Übergang der flüssigen in die feste Phase efolgt nahezu schlagartig, was dazu führt, daß das flüssige Reaktionsgemisch in der Form an deren Wandungen gleichsam erstarrt.

Polyurethan-Polyharnstoff-Formulierungen mit etwas verminderter Reaktivität und dadurch verbesserter Fließfähigkeit werden nach Angaben der EP-OS 269 15 erhalten, wenn man als aromatische Diamine 3,3',5,5'-tetraalkylsubstituierte 4,4'-Diamino-diphenylmethane verwendet, in denen die Alkylreste gleich oder verschieden sind und einen Methyl-, Ethyl-, Isopropyl-, sek.- oder tert.-Butylrest bedeuten, wobei mindestens einer der Substituenten ein Isopropyl- oder sek.-Butylrest sein muß.

Bekannt ist außerdem die Verwendung von Amidinen, mono- und bicyclischen Amidinen als Polyurethankatalysatoren. Nach Angaben der DE-OS 1 950 262 (GB 1 287 150) werden Amidine, beispielsweise N'-Cyclohexyl-N,N-dimethylformamidin, als Katalysatoren zur Herstellung von Polyurethanschaumstoffen aus aliphatischen Diisocyanaten eingesetzt. In der gleichen Offenlegungsschrift werden auch monocyclische Amidine, beispielsweise 3-Butyl-3,4,5,6-tetrahydro-pyrimidin, erwähnt. Übliche Polyurethankatalysatoren sind auch substituierte Imidazole und Dialkylaminopyridine. Bicyclische Amidine als Urethan-katalysatoren werden beschrieben in der DE-OS 1 745 418 (US 3 769 244), wobei auch die Mitverwendung von metallorganischen Verbindungen erwähnt wird.

Amidine haben häufig den Nachteil, daß sie leicht von Wasser zersetzt werden (Methoden der organischen Chemie, Houben-Weyl, Band XI/1, Seite 940, 4. Auflage, Verlag G. Thieme, Stuttgart, 1957). Dies schließt ihre Anwendung in wasserhaltigen Systemen weitgehend aus. Aber auch die in Polyolen anwesenden geringen Wassermengen reichen üblicherweise aus, um die Katalysatorwirkung freier Amidine innerhalb kurzer Zeit stark herabzusetzen. Die Lagerung von amidinhaltigen Polyolmischungen ist daher nicht möglich.

Die Verwendung von freien Amidinen wird jedoch nicht nur durch Wasser, sondern auch durch Halogenkohlenwasserstoffe stark eingeschränkt. Diese reagieren rasch unter Quarternisierung, wobei die Katalysatorwirkung der Amidine weitgehend verloren geht.

Zur Beseitigung dieser Nachteile werden in der DE-OS 2 434 185 (US 4 006 124) Amidin-Metall-Komplexe beschrieben. Wie in der DE-OS dargelegt wird, müssen die Komplexe vor der Zugabe zum Polyol in einem separaten Vefahrensschritt hergestellt werden, da die Zugabe der Einzelkomponenten zum Polyol wesentlich schlechtere Ergebnisse bei der Herstellung von Polyurethanschaumstoffen ergibt. Die Verwendung von Amidinen oder Amidin-Metall-Komplexen, die sich hinsichtlich ihrer chemischen Eigenschaften grundlegend unterscheiden, als Katalysatoren zur Herstellung von gegebenenfalls zelligen Formkörpern mit Hilfe der Reaktionsspritzgußtechnik wird hingegen nicht erwähnt.

Nach Angaben der DE-A- 2 722 514 werden beliebige, mindestens eine Amidingruppe aufweisende organische Verbindungen als Katalysatoren für Zweikomponenten-Lacke auf Basis von blockierten Polyisocyanaten und organischen Polyaminen verwendet, die bei Raumtemperatur eine ausreichende Verarbeitungszeit und Trocknungszeit gewährleisten. Wie in der Anmeldebeschreibung zutreffend dargelegt wird, handelt es sich hierbei um eine unter Abspaltung des Blockierungsmittels ablaufende Polykondensationsreaktion, die mit üblichen Polyadditionsreaktionen kaum, mit der Reaktionsspritzgußtechnik, bei der hochreaktive, vorzugsweise aromatische Diamine enthaltende Formulierungen im one shot-Vefahren in einem geschlossenen Formwerkzeug rasch zu Formkörpern verarbeitet werden, wobei die Formstandzeiten üblicherweise unter 150 Sekunden liegen, jedoch nicht vergleichbar ist. In der Publikation wird ferner die Mitverwendung von beschleunigend oder verzögernd wirkenden Cokatalysatoren nicht erwähnt.

Aufgabe der vorliegenden Erfindung war es, Katalysatoren zu entwickeln, die eine starke Beschleunigung der Polyadditionsreaktion von hydroxylgruppenhaltigen Verbindungen mit Isocyanaten bewirken und die obengenannten Nachteile überwinden.

Diese Aufgabe konnte gelöst werden durch ein Verfahren zur Herstellung von gegebenenfalls zellhaltigen Polyurethan- oder Polyurethan-Polyharnstoff-Formkörpern durch Umsetzung von aromatischen Polyisocyanaten, Polyolen und Kettenverlängerungsmitteln in Gegenwart von Katalysatoren sowie gegebenenfalls Treibmitteln, Hilfs- und Zusatzstoffen, das dadurch gekennzeichnet ist, daß man als Katalysatoren monocyclische Amidine der Formel

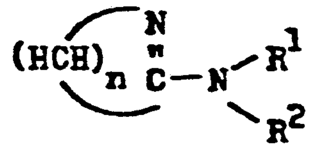
I

verwendet, in der bedeuten:

$R^1$: Wasserstoff oder $R^2$

$R^2$: einen linearen oder verzweigten Alkylrest mit 1 bis 20 C-Atomen, vorzugsweise einen verzweigten Alkylrest mit 1 bis 14 C-Atomen,

einen linearen oder verzweigten, OH-, $NH_2$-, -NH- und/oder SH-Gruppen enthaltenden Alkylrest mit 1 bis 20 C-Atomen,

einen Cycloalkylrest mit 5 bis 12, vorzugsweise 5 bis 6 C-Atomen, in dem eine oder mehrere, vorzugsweise 1 bis 3 Methylengruppe durch -O-, -S-, -NH-, -CO-Brückenglieder substituiert sein können,

einen mit linearen oder verzweigten Alkylgruppen mit 1 bis 6 C-Atomen, einem Cyclohexylrest, OH-, $NH_2$- oder SH-Gruppen substituierten Cycloalkylrest mit 5 bis 12, vorzugsweise 5 bis 6 C-Atomen, bei dem eine oder mehrere Methylengruppen durch -O-, -S- oder NH-Brückenglieder substituiert sein können,

einen aromatischen Rest mit 6 bis 15, vorzugsweise 6 C-Atomen,

einen mit linearen oder verzweigten Alkylgruppen mit 1 bis 6, vorzugsweise 1 bis 3 C-Atomen, OH-, $NH_2$-, $NHCH_3$-, $N(CH_3)_2$- oder SH-Gruppen, vorzugsweise Alkylgruppen substituierten aromatischen Rest mit 6 bis 15 C-Atomen, vorzugsweise 6 C-Atomen,

einen Aralkylrest mit 7 bis 11, vorzugsweise 7 bis 8 C-Atomen,

wobei die Reste $R^1$ und $R^2$ gleich oder verschieden sind oder beide gemeinsam einen Ring mit 4 bis 12, vorzugsweise 4 bis 7 C-Atomen bilden, in dem eine oder mehrere Methylengruppen durch -O-, -S-, -NH-, -CO-Brückenglieder, vorzugsweise -NH- und/oder -O-Brückenglieder substituiert sein können und der gegebenenfalls als Substituenten lineare oder verzweigte Alkylreste mit 1 bis 6 C-Atomen, vorzugsweise 1 bis 4 C-Atomen oder Carbonsäureestergruppen gebunden enthält und

n eine ganze Zahl von 3 bis 12, vorzugsweise 3 bis 5 und insbesondere 5 ist.

Die erfindungsgemäß verwendbaren monocyclischen Amidine können einzeln oder in Form von Mischungen Anwendung finden. Die monocyclischen Amidine werden gemeinsam mit Cokatalysatoren aus der Gruppe der

a) tertiären Amine,

b) Metallverbindungen der Formel

$MeX_nY_m$(II)

wobei

Me ein (n + m)-wertiges Metall, vorzugsweise ein Metall aus der I., II., VII. oder VIII. Nebengruppe oder der IV. Hauptgruppe des Periodensystems der chemischen Elemente bedeutet,

X für einen aliphatischen Kohlenwasserstoffrest mit 1 bis 18 Kohlenstoffatomen, einen aromatischen Kohlenwasserstoffrest mit 6 bis 10 Kohlenstoffatomen oder einen araliphatischen Kohlenwasserstoffrest mit 7 bis 15 Kohlenstoffatomen steht,

Y für ein gegebenenfalls olefinische Doppelbindungen und/oder alkoholische Hydroxylgruppen aufweisendes aliphatisches, einfach negativ geladenes Carboxylatanion mit 2 bis 18 Kohlenstoffatomen oder ein einfach negativ geladenes Enolatanion mit 5 bis 18 Kohlenstoffatomen steht und

n für 0 bis 2,

m für 0 bis 4 stehen, mit der Einschränkung, daß die Summe n + m gleich 2 bis 4 ergibt

und

c) gegebenenfalls olefinisch ungesättigte Doppelbindungen und/oder hydroxylgruppenhaltigen aliphatischen Carbonsäuren mit 2 bis 18 C-Atomen

oder Mischungen aus mindestens 2 der genannten Cokatalysatoren verwendet.

Sofern als Katalysatoren Mischungen aus den monocyclischen Amidinen der Formel (I) und Metallverbindungen (b) der Formel (II) oder aliphatische Carbonsäuren (c) eingesetzt werden, kommen diese in Molverhältnissen von Amidin: Metallverbindung und/oder aliphatischer Carbonsäure von 0,5 bis 5: 1, vorzugsweise 1 bis 3: 1 zur Anwendung.

Die monocyclischen Amidine der Formel (I) bewirken in Kombination mit Metallverbindungen (b) der Formel (II) eine starke katalytische Beschleunigung der Polyaddition von Isocyanat- mit Hydroxylgruppen. Überraschenderweise ist hierbei völlig unerheblich, ob aus den monocyclischen Amidinen und Metallverbindungen (b) vor der Zugabe zum Polyol in einem separaten Verfahrensschritt Komplexverbindungen hergestellt werden oder ob die Komponenten einzeln dem Polyol einverleibt werden. Dies gilt insbesondere auch für kristalline Amidine, die mit den festen oder flüssigen Metallverbindungen (b) zusammengeschmolzen oder getrennt im Polyol gelöst werden.

Überraschenderweise kann bei Verwendung von Kombinationen aus monocyclischen Amidinen und Metallverbindungen (b) in hochreaktiven Polyurethan-Polyharnstoff-Reaktionsspritzgußsystemen auf Basis von

primären aromatischen Diaminen der Anteil an beispielsweise Zinnkatalysator um den Faktor 2 bis 4 gesenkt werden. Dies ist umso bemerkenswerter, da bei derartigen Systemen relativ große Mengen an metallorganischen Katalysatoren eingesetzt werden, um die Reaktion der Hydroxyl- mit Isocyanatgruppen so stark zu beschleunigen, daß sie etwa die Geschwindigkeit von Amino- mit Isocyanatgruppen erreicht. Derartig hohe Gehalte an metallorganischen Verbindungen beeinträchtigen aber die Wärmealterungsbeständigkeit von auf diese Weise hergestellten Materialien.

Verwendet man hingegen monocyclische Amidine mit einer entsprechend geringeren Menge an Metallverbindungen (b), so erhält man Polyurethan-Polyharnstoff-Formkörper mit ausgezeichneter Wärmealterungsbeständigkeit, insbesondere bei Temperaturen über 130° C.

Überraschenderweise sind die monocyclischen Amidine nicht nur gegen Hydrolyse, sondern auch gegen Aminolyse stabil so daß Mischungen aus Polyolen und aromatischen Diaminen wie sie üblicherweise nach der Reaktionsspritzgußtechnik verarbeitet werden, lagerfähig sind.

Vorteilhaft ist ferner, daß die monocyclischen Amidine meist nur schwach und z.T. angenehm aromatisch riechen oder aufgrund von mit Isocyanaten reaktiven Substituenten fest in das Polyadditionsprodukt eingebaut werden, und damit zu geruchlosen Materialien führen. Die nicht einbaufähigen monocyclischen. Amidine besitzen eine derartig geringe Flüchtigkeit, daß es nicht zu Auswanderungserscheinungen kommt, wie sie von vielen tertiären Aminen bekannt ist.

Die höchste Katalysewirkung entwickeln die monocyclischen Amidine, wenn sie nicht nur in Kombination mit Metallverbindungen (b), sondern auch mit tertiären Aminen (a) verwendet werden.

Die monocyclischen Amidine weisen jedoch nicht nur die obengenannten vorteilhaften Eigenschaften auf, sondern sie eignen sich auch als Bestandteil für sogenannte verzögerte Katalysatoren. Verzögernd wirkende Katalysatorsysteme werden durch Kombination der monocyclischen Amidine mit aliphatischen Carbonsäuren (c) erhalten. Dabei ist unerheblich, ob die monocyclischen Amidinsalze separat hergestellt oder in situ im Polyol gebildet werden. Ihre Wirkung besteht darin, daß die Steigzeit bzw. die Entformungszeit von Formkörpern aus so hergestellten Polyurethan-Polyharnstoffsystemen praktisch unbeeinflußt bleibt, während die Topfzeit erheblich verkürzt wird.

Die erfindungsgemäß verwendbaren monocyclischen Amidine können beispielsweise analog der in "Methoden der Organischen Chemie" Houben-Weyl, Band XI/2, Seite 57, 4. Auflage, Verlag G. Thieme, Stuttgart 1958, genannten Herstellungsvorschrift nach folgendem Reaktionsschema hergestellt werden

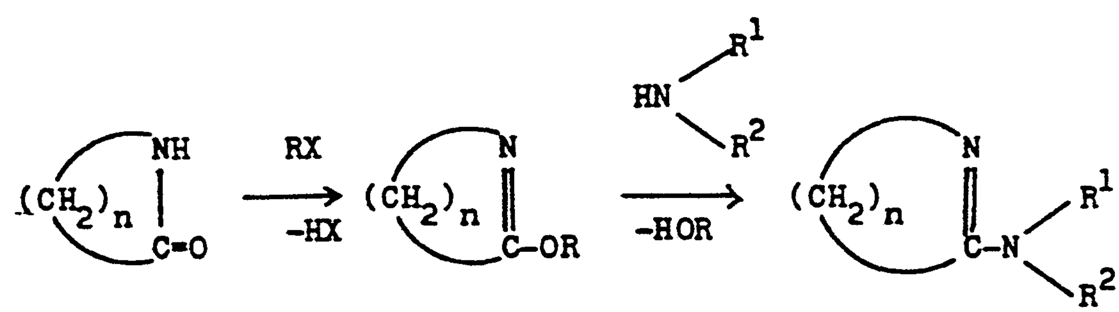


III    II

Als eine Ausgangskomponente zur Herstellung der monocyclischen Amidine werden Lactimether der Formel

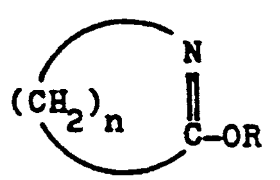

III

verwendet, in der R einen Alkylrest mit 1 oder 2 C-Atomen, vorzugsweise einen Methylrest bedeutet und n eine ganze Zahl von 3 bis 12, vorzugsweise 3 bis 5 und insbesondere 5 ist. Beispielhaft genannte seien Lactimether, wie 2-Methoxi-3,4-dihydro-5H-azol, 2-Ethoxi-3,4-dihydro-5H-azol, 2-Methoxi-3,4,5,6-tetrahydroazin, 2-Ethoxi-3,4,5,6-tetrahydroazin, 2-Methoxi-3,4,5,6-tetrahydro-7H-azepin, 2-Ethoxi-3,4,5,6-tetrahydro-7H-azepin, 2- Methoxi-3,4,5,6,7,8- hexahydroazomin, 2- Ethoxi-3,4,5,6,7,8-hexahydroazomin, 1 -Aza-2- methoxi-cyclododeca-1-en, 1 -Aza-2-ethoxi-cyclododeca-1-en. Vorzugsweise verwendet werden 2-Methoxi-3,4-dihydro-5H-azol, 2-Ethoxi-3,4,5,6-tetrahydro-7H-azepin und insbesondere 2-Methoxi-3,4,5,6-tetrahydro-7H-azepin.

Als andere Ausgangskomponente kommen beispielsweise in Betracht: primäre und sekundäre,

gegebenenfalls substituierte Alkylamine mit 1 bis 20 C-Atomen, wie z.B. Methyl-, n-Propyl-, Isopropyl-, Butyl-, Isobutyl-, sek.-Butyl-Isopentyl-, Hexyl-, Octyl-, 2- Ethyl-hexyl-, Diisopropyl-, Dihexyl-, Ethyl-propyl- und 2-Dimethyl-aminoethylamin, 1,2-Diaminopropan, 1,4-Diaminobutan und vorzugsweise Ethanolamin, Diethanolamin, Ethylendiamin und N,N-Dimethylethylendiamin; primäre und sekundäre, gegebenenfalls substituierte Cycloalkylamine mit 5 bis 12 C-Atomen, bei denen eine oder mehrere Methylengruppen durch -O-, -S- oder -NH- Brückenglieder substituiert sein können, wie z.B. 3-Amino-1-cyclohexylaminopropan und vorzugsweise Cyclohexylamin, 4,4'-Diamino-dicyclohexylmethan und 3,3'-Dimethyl-4,4'-diamino-dicyclohexylmethan, primäre und sekundäre gegebenenfalls substituierte aromatische Amine mit 6 bis 15 C-Atomen, wie z.B. Ethyl-α-naphthylamin und vorzugsweise Anilin, o- bzw. p-Toluidin und 4,4'-Diamino-diphenylmethan, primäre und sekundäre Aralkylamine mit 7 bis 11 C-Atomen, wie z.B. o- bzw. p-Methoxiphenylethylamin und vorzugsweise Benzylamin, Phenylethylamin und Homoveratrylamin, und Azacycloalkane mit 4 bis 12 Ringgliedern, in denen eine oder mehrere Methylengruppen durch -O-, -S-, -NH- oder -CO- Brückenglieder substituiert sein können und die gegebenenfalls als Substituenten Alkylreste mit 1 bis 6 C-Atomen oder Carbonsäureestergruppen enthalten, wie z.B. 2-Methylpiperidin, 4-Methylpiperidin, Pyridon-4 und vorzugsweise Piperidin, Hexamethylenimin und Morpholin und Azaaromaten mit mindestens einer NH-Gruppe, wie z.B. Imidazol, 2-Methylimidazol, 4-Methylimidazol, 2-Ethylimidazol, 2-Isopropylimidazol, Pyrazol, 3-Methyl-pyrazol und 3,5-Dimethylpyrazol, vorzugsweise Imidazol, 4-Methylimidazol und Pyrazol.

Von den so herstellbaren monocyclischen Amidinen werden vorzugsweise verwendet: Hexahydro-1-(3,4,5,6-tetrahydro-7H-azepin-2-yl)-1H-azepin, N-(3,4,5,6-tetrahydro-7H-azepin-2-yl)-ethanolamin, N-(3,4,5,6-tetrahydro-7H-azepin-2-yl)-diethanolamin, N-(3,4,5,6-tetrahydro-7H-azepin-2-yl)-ethylendiamin, N,N'-Di-(3,4,5,6-tetrahydro-7H-azepin-2-yl)-ethylendiamin, N-(3,4,5,6-tetrahydro-7H-azepin-2-yl)-N',N'-dimethylethylendiamin, N-(3,4,5,6-tetrahydro-7H-azepin-2-yl)-N-cyclohexylamin, N-(3,4,5,6-tetrahydro-7H-azepin-2-yl)-morpholin, N-(3,4,5,6-tetrahydro-7H-azepin-2-yl)-pyridon-4, N-(3,4,5,6-tetrahydro-7H-azepin-2-yl)-cysteamin und insbesondere Hexahydro-1-(3,4,5,6-tetrahydro-2H-azepin-7-yl)-1H-azepin, N-(Tetrahydro-1 -azepin-2-yl)-diethanolamin, N-(tetrahydro-1-azepin-2-yl)-cyclohexylamin, N-(Tetrahydro-1-azepin-2-yl)-morpholin und N-(Tetrahydro-1-azepin-2-yl)-anilin.

Wie bereits dargelegt wurde, werden die monocyclischen Amidine mit Cokatalysatoren aus der Gruppe der

(a) tertiären Amine

(b) Metallverbindungen der Formel Me $X_n$ $Y_m$ (II) und

(c) gegebenenfalls olefinisch ungesättigte Doppelbindungen und/oder Hydroxylgruppen enthaltenden aliphatischen Carbonsäuren mit 2 bis 18, vorzugsweise 2 bis 10 C-Atomen angewandt.

(a) Als geeignete tertiäre Amine seien beispielsweise genannt: Triethylamin, Tributylamin, Dimethylbenzylamin, N-Methyl-, N-Ethyl-, N-Cyclohexylmorpholin, N,N,N',N'-Tetramethyl-ethylendiamin, N,N,N',N'-Tetramethyl-butandiamin-1.4, Pentamethyl-diethylentriamin, N,N,N',N'-Tetramethyldiaminoethylether, Bis-(dimethylaminopropyl)-harnstoff, Dimethylpiperazin, 1,2-Dimethylimidazol, 1-Aza-bicyclo-(3, 3, 0)-octan und vorzugsweise 1,4-Diaza-bicyclo-(2, 2, 2)-octan und Alkanolverbindungen, wie z.B. Triethanolamin, Triisopropanolamin, N-Methyl- und N-Ethyl-diethanolamin und Dimethyl-ethanolamin. Die tertiären Amine werden in Molverhältnissen von monocyclischem Amidin zu tertiärem Amin von 0,1:1 bis 0,5:1 angewandt.

(b) Als Metallverbindungen der Formel Me $X_n$ $Y_m$ werden vorzugsweise Metallverbindungen des dreiwertigen Eisens, des zweiwertigen Nickels, des zweiwertigen Mangans, des zweiwertigen und/oder vierwertigen Zinns eingesetzt. Beispielhaft genannt seien: Fe(II)acetat, Fe(III)oleat, Fe(III)stearat, Fe(III)acetylacetonat, Zn-acetat, Zn-oleat, Zn-acetylacetonat, Mn(II)acetat, Mn(II)acetylacetonat, Mn(II)palmitat, Mn(II)versatat, Mn(II)naphthenat, Sn(II)acetat, Sn(II)octoat, Sn(II)isooctoat, Sn(II)ricinoleat, Sn(II)naphthenat, Dibutyl-Sn(IV)laurat, Dibutyl-Sn(IV)octoat, Diethyl-Sn(IV)-2-methylhexoat, Diphenyl-Sn(IV)capronat, Ni(II)acetat, Ni(II)octoat, Ni(II)oleat, Ni(I)ricinoleat, Ni(II)acetylacetonat und Ni(II)salicylat.

Die monocyclischen Amidine und Metallverbindungen (b) können der reaktionsfähigen Mischung einzeln zugefügt werden. Durch einfaches Zusammengeben der Komponenten bei 0° bis 150°C, vorzugsweise 10 bis 80°C können jedoch auch Komplexe hergestellt werden. Sofern eine der beiden Komponenten bei dieser Temperatur flüssig ist, kann die Komplexbildung in Abwesenheit von Lösungsmitteln durchgeführt werden. Falls beide Komponenten Feststoffe sind, werden beide Komponenten durch Zusammenschmelzen zum Komplex vereinigt oder vorzugsweise eine der beiden Komponenten in einem inerten Lösungsmittel, wie z.B. Benzol, Toluol oder Methyl-tert.butylether, gelöst und die andere Komponente unter Kühlung zugegeben. Anschließend wird das Lösungsmittel vorzugsweise unter vermindertem Druck abgetrennt.

Besonders bewährt haben sich und daher vorzugsweise verwendet werden Katalysatoren, die aus Mischungen von monocyclischen Amidinen, tertiären Aminen (a) und Metallverbindungen (b) bestehen. Geeignete Mischungen enthalten beispielsweise oder bestehen aus:0,001 bis 5,0 Gew.-Teile, vorzugsweise 0,01 bis 1,0 Gew.-Teile mindestens eines monocyclischen Amidins,

0,005 bis 5,0 Gew.-Teile, vorzugsweise 0,01 bis 2,5 Gew.-Teile mindestens eines tertiären Amins (a) und

0,001 bis 2,5 Gew.-Teile, vorzugsweise 0,005 bis 1,0 Gew.-Teile einer Metallverbindung (b) pro 100 Gew.-Teile Polyol.

Verzögernd wirkende Katalysatorsysteme werden durch Kombination von monocyclischen Amidinen mit gegebenenfalls olefinisch ungesättigte Doppelbindungen und/oder Hydroxylgruppen enthaltenden aliphatischen Carbonsäuren erhalten. Typische Säuren der genannten Art sind Monocarbonsäuren, wie z.B. Ameisen-, Essig-, Butter-, Capron-, Valerian-, Octyl-, Laurin-, Stearin- und Olsäure, Dicarbonsäuren, wie z.B.

Oxal-, Malon-, Bernstein-, Fumar- und Adipinsäure und Hydroxicarbonsäuren, wie Glykolsäure, Milchsäure, Ricinolsäure und Weinsäure. Die Katalysatorkombination kann in situ in der Reaktionsmischung durch Hinzufügen der Einzelkomponenten gebildet werden. Es ist jedoch auch möglich, die monocyclischen Amidine mit der Carbonsäure bei Raumtemperatur gegebenenfalls in Gegenwart von inerten Lösungsmitteln, wie Benzol, Hexan, Methyl-tert.butylether in das Salz überzuführen und das Lösungsmittel nach Abschluß der Umsetzung abzutrennen.

Die beim erfindungsgemäßen Verfahren verwendbaren monocyclischen Amidine oder Mischungen aus monocyclischen Amidinen und Cokatalysatoren sowie deren Metallkomplexe und/oder Carbonsäuresalze sind in nieder- oder hochmolekularen Polyhydroxylverbindungen, beispielsweise Polyolen oder Kettenverlängerungsmitteln, wie sie zur Herstellung von Polyurethan-Kunststoffen eingesetzt werden, löslich. Die monocyclischen Amidine werden zweckmäßigerweise in Mengen von 0,001 bis 5,00, vorzugsweise 0,01 bis 1,0 Gew.-Teilen pro 100 Gew.-Teilen Polyol eingesetzt. Die Mischungen aus monocyclischen Amidinen und Cokatalysatoren werden hingegen in Mengen von 0,006 bis 10 Gew.-Teilen, vorzugsweise von 0,02 bis 3,5 Gew.-Teilen pro 100 Gew.-Teilen Polyol angewandt.

Zur Herstellung der gegebenenfalls zelligen Polyurethan- oder Polyurethan-Polyharnstoff-Formkörper eignen sich die an sich bekannten Ausgangsstoffe der Polyurethanchemie.

Als Polyisocyanate kommen aromatische Di- und Polyisocyanate, wie 4,4'-, 2,4'- und 2,2'-Diisocyanatodiphenylmethan und die entsprechenden Isomerengemische, 2,4- und 2,6-Diisocyanato-toluol und die entsprechenden Isomerengemische, 1,5-Diisocyanato-naphthalin, Polyphenyl-polymethylenpolyisocyanate, 2,4,6-Triisocyanato-toluol und vorzugsweise Gemische aus Diisocyanato-diphenylmethanen und Polyphenylpolymethylen-polyisocyanaten (Roh-MDI) in Frage. Die genannten Di- und Polyisocyanate können einzeln oder in Form vom Mischungen eingesetzt werden.

Häufig werden auch sogenannte modifizierte mehrwertige Isocyanate, d.h. Produkte die durch chemische Umsetzung obiger Di- und/oder Polyisocyanate erhalten werden, verwendet. Als modifizierte organische Di- und Polyisocyanate kommen beispielsweise in Betracht: Carbodiimidgruppen aufweisende Polyisocyanate gemäß DE-PS 10 92 007, Allophanatgruppen aufweisende Polyisocyanate, wie sie z.B. in der britischen Patentschrift 994 890, den ausgelegten Unterlagen des belgischen Patents 761 626 und der NL-OS-71 02 524 beschrieben werden, Isocyanuratgruppen aufweisende Polyisocyanate wie sie z.B. in den DE-PS 10 22 789, 1 222 067 und 10 27 394 sowie den DE-OS 19 29 034 und 20 04 048 beschrieben werden, Urethangruppen aufweisende Polyisocyanate, wie sie z.B. in den ausgelegten Unterlagen des belgischen Patents 752 261 oder der US-PS 3 394 164 beschrieben werden, acylierte Harnstoffgruppen aufweisende Polyisocyanate z.B. gemäß DE-PS 12 30 778, Biuretgruppen aufweisende Polyisocyanate z.D. gemäß DE-PS 11 01 394 und GB-PS 889 050; durch Telomerisationsreaktionen hergestellte Polyisocyanate z.B. entsprechend den ausgelegten Unterlagen des belgischen Patents 723 640, Estergruppen aufweisende Polyisocyanate, wie sie z.B. in der GB-PS 965 474 und 10 72 956, der US-PS 3 567 765 und der DE-PS 1 231 688 genannt werden.

Vorzugsweise kommen jedoch zur Anwendung: urethangruppenhaltige Polyisocyanate, beispielsweise mit niedermolekularen Diolen, Triolen oder Polypropylenglykolen, modifiziertes 4,4'-Diphenylmethan-diisocyanat oder Toluylen-diisocyanat, Carbodiimidgruppen und/oder Isocyanuratringe enthaltende Polyisocyanate, z.B. auf Diphenylmethan-diisocyanat und/oder Toluylendiisocyanat-Basis und insbesondere Toluylendiisocyanate, Diphenylmethan-diisocyanate, Mischungen aus Diphenylmethan-diisocyanaten und Polyphenyl-polymethylenpolyisocyanaten (Roh-MDI) und Gemische aus Toluylendiisocyanaten und Roh-MDI.

Als Polyole werden bei dem erfindungsgemäßen Verfahren vorzugsweise übliche lineare und/oder verzweigte, d.h. di- bis tetrafunktionelle, vorzugsweise di- und/oder trifunktionelle Polyesterole und insbesondere Polyetherole mit Molekulargewichten von 1000 bis 8000 und vorzugsweise 2000 bis 7000, verwendet. In Betracht kommen jedoch auch andere hydroxylgruppenhaltige Polymere mit den genannten Molekulargewichten, beispielsweise Polyesteramide, Polyacetale, wie Polyoxymethylene und Butandiolformale und Polycarbonate, insbesondere solche, hergestellt aus Diphenylcarbonat und Hexandiol-1,6 durch Umesterung.

Geeignete Polyesterole können beispielsweise aus Dicarbonsäuren, vorzugsweise aliphatischen Dicarbonsäuren, mit 2 bis 12, vorzugsweise 4 bis 8 Kohlenstoffatomen im Alkylenrest und mehrwertigen Alkoholen, vorzugsweise Diolen hergestellt werden. Genannt seien beispielhaft aliphatische Dicarbonsäuren, wie Bernsteinsäure, Glutarsäure, Pimelinsäure, Undecandisäure, Dodecandisäure und vorzugsweise Adipinsäure und aromatische Dicarbonsäuren, wie Phthalsäure und Terephthalsäure. Beispiele für zwei- und mehrwertige, insbesondere zweiwertige Alkohole sind: 1,2- bzw. 1,3-Propylenglykol, Dipropylenglykol, 1,5-Pentandiol, 1,6-Hexamethylenglykol, Decandiol-1,10, Glycerin, Trimethylolpropan und vorzugsweise Ethylenglykol, Diethylenglykol und 1,4-Butylenglykol. Als mehrwertige Alkohole können ferner Alkanolamine, wie Triethanolamin und Triisopropanolamin verwendet werden. Sofern zur Herstellung der Polyesterole polyfunktionelle, insbesondere trifunktionelle Verbindungen mitverwendet werden, muß deren Gehalt so gewählt werden, daß die Funktionalität der erhaltenen Polyesterole maximal 3,5, vorzugsweise 2 bis 3,0 ist.

Besonders bewährt und daher vorzugsweise verwendet werden solche Polyesterole, die durch Polykondensation eines Dicarbonsäuregemisches, das bezogen auf das Gesamtgewicht der genannten Dicarbonsäuren enthält: 20 bis 35 Gew.%, vorzugsweise 28 bis 33 Gew.% Bernsteinsäure, 35 bis 50 Gew.%, vorzugsweise 40 bis 45 Gew.% Glutarsäure und 20 bis 32 Gew.%, vorzugsweise 24 bis 28 Gew.% Adipinsäure und Alkoholmischungen aus Ethylenglykol/1,4-Butylenglykol, Ethylenglykol/Diethylenglykol, Ethylenglykol/Trimethylolpropan, Diethylenglykol/Trimethylolpropan, Ethylenglykol/ Triisopropanolamin und

Diethylenglykol/Triisopropanolamin erhalten werden.

Die Polyesterole besitzen Molekulargewichte von 1000 bis 3000 und vorzugsweise 1500 bis 2500.

Vorzugsweise als Polyole verwendet werden jedoch Polyetherole, die nach bekannten Verfahren aus einem oder mehreren Alkylenoxiden mit 2 bis 4 Kohlenstoffatomen im Alkylenrest und einem Startermolekül, das 2 bis 8, vorzugsweise 2 bis 4 aktive Wasserstoffatome enthält, hergestellt werden.

Geeignete Alkylenoxide sind beispielsweise Tetrahydrofuran, 1,3-Propylenoxid, 1,2- bzw. 2,3-Butylenoxid, Styroloxid, Epichlorhydrin und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,4- und 2,6-Toluylendiamin und 4,4'-, 2,4'- und 2,2'-Diamino-diphenylmethan. Von den Verbindungen der erwähnten Gruppe sind besonders interessant N,N,N',N'-Tetrakis-(2-hydroxyethyl)-ethylendiamin, N,N,N',N'-Tetrakis-(2-hydroxypropyl)-ethylendiamin, N,N,N',N'',N''-Pentakis-(2-hydroxypropyl-)ethylentriamin, Phenyldiisopropanolamin und höhere Alkylenoxidaddukte von Anilin.

Als Startermoleküle kommen ferner in Betracht Alkanolamine, wie Ethanolamin, Diethanolamin, N-Methyl- und N-Ethylethanolamin, N-Methyl- und N-Ethyl-diethanolamin und Triethanolamin, Ammoniak, Hydrazin und Hydrazide. Vorzugsweise verwendet werden mehrwertige, insbesondere zwei- und/oder dreiwertige Alkohole, wie Ethylenglykol, Propylenglykol-1,2 und -1,3, Diethylenglykol, Dipropylenglykol, Butylenglykol-1,4, Hexamethylenglykol-1,6, Glycerin, Trimethylol-propan und Pentaerythrit.

Andere anwendbare Polyole sind die nicht-reduzierenden Zucker, die nicht-reduzierenden Zuckerderivate und bevorzugt deren Alkylenoxid-Addukte, worin die Alkylenoxide 2 bis 4 Kohlenstoffatome haben. Verwendbare nicht-reduzierbare Zucker und Zuckerderivate sind z.B. Saccharose, Alkylglykoside, wie Methylglykosid und Ethylenglukosid, ferner Glykolglykoside, wie Ethylenglykolglukosid, Propylenglykolglukosid, Glyzeringlukosid und 1,2,6-Hexantriolglukosid.

In Betracht kommen ferner Polyole auf Basis von Polyphenolen und vorzugsweise deren Alkylenoxid-Addukte, in denen die Alkylenoxide 2 bis 4 Kohlenstoffatome besitzen. Anwendbare Polyphenole sind z.B. Bisphenol A, Bisphenol F, Kondensationsprodukte aus Phenol und Formaldehyd, besonders die Novolake, Kondensationsprodukte aus verschiedenen Phenolverbindungen und Acrolein, wobei die einfachsten Substanzen dieser Gruppe die 1,1,3-Tris-(hydroxyphenyl)-propane sind, Kondensationsprodukte verschiedener Phenolverbindungen mit Glyoxal, Glutaraldehyd und anderen Dialdehyden wobei die einfachsten Substanzen dieser Gruppe die 1,1,2,2-Tetrakis-(hydroxy-phenyl)-ethane sind.

Eine weitere verwendbare Gruppe von Polyolen sind die Alkylenoxid-Addukte, vorzugsweise die Ethylenoxid-, 1,2-Propylenoxid-, Butylenoxid- und deren Mischungen, -Addukte von Kondensationsprodukten aus aromatischem Amin, Phenol und Aldehyd. Die Kondensationsprodukte erhält man durch Kondensieren eines aromatischen Amins, z.B. Anilin oder Toluidin, eines Phenols z.B. Phenol oder Kresol und eines Aldehyds, vorzugsweise Formaldehyd bei erhöhten Temperaturen, z.B. im Bereich von 60 bis 180°C. Das Kondensationsprodukt wird dann isoliert und unter Bildung der Polyole mit einem Alkylenoxid umgesetzt. Besonders erwähnenswert sind die Propylenoxid- und Propylen-Ethylenoxid-Addukte von Anilin/Phenol/Formaldehyd-Kondensationsprodukten.

Die Alkylenoxid-Addukte von Phosphor- und Polyphosphorsäuren sind eine weitere verwendbare Gruppe von Polyolen. Bevorzugte Alkylenoxide sind Ethylenoxid, 1,2-Propylenoxid die Butylenoxide und Epichlorhydrin. Als Phosphorsäuren sind Phosphorsäure, phosphorige Säure, die Polyphosphorsäuren, wie Tripolyphosphorsäure, und die Polymetaphosphorsäuren günstig.

Die Polyetherole besitzen Molekulargewichte von 2000 bis 8000 und vorzugsweise 2500 bis 7000. Sie können ebenso wie die Polyesterole einzeln oder in Form von Mischungen verwendet werden. Ferner können sie mit den Polyesterolen, und hydroxylgruppenhaltigen Polyesteramiden, Polyacetalen und Polycarbonaten gemischt werden.

Als Kettenverlängerungsmittel verwendet werden vorzugsweise niedermolekulare di- bis tetrafunktionelle Verbindungen aus der Gruppe der aliphatischen und/oder araliphatischen Diole und/oder Triole, der sekundären aromatischen Diamine, der aromatischen Diamine und der 3,3',5,5'-tetra-alkylsubstituierten 4,4'-Diaminodiphenylmethane.

Geeignete Diole und Triole besitzen vorteilhafterweise Molekulargewichte kleiner als 400, vorzugsweise 60 bis 300. In Betracht kommen beispielsweise aliphatische und/oder araliphatische Diole mit 2 bis 14, vorzugsweise 4 bis 10 Kohlenstoffatomen, wie Ethylenglykol, Propandiol-1,3, Decandiol-1,10, Diethylenglykol, Dipropylenglykol und vorzugsweise Butandiol-1,4, Hexandiol-1,6 und Bis-(2-hydroxyethyl)-hydrochinon, Triole, wie Glycerin und Trimethylolpropan und niedermolekulare hydroxylgruppenhaltige Polyalkylenoxide auf Basis Ethylen- und/oder Propylenoxid und den vorgenannten Startermolekülen.

Als sek. aromatische Diamine seien beispielhaft genannt: N,N'-dialkylsubstituierte aromatische Diamine, die gegebenenfalls am aromatischen Kern durch Alkylreste substituiert sein können, mit 1 bis 20, vorzugsweise 1 bis 4 Kohlenstoffatomen im N-Alkylrest, wie N,N'-Diethyl-, N,N'-Di-sek-pentyl-, N,N'-Di-sek-hexyl-, N,N'-Di-sek-decyl-, N,N'-Dicyclohexyl-p- bzw. m-Phenylendiamin, N,N'-Dimethyl-, N,N'-Diethyl-, N,N'-Diisopropyl-, N,N'-Di-sek-butyl-, N,N'-Dicyclohexyl-4,4'-diamino-diphenylmethan und N,N'-Di-sek-butyl-benzidin.

Als aromatische Diamine werden zweckmäßigerweise solche verwendet, die in ortho-Stellung zu den Aminogruppen mindestens einen Alkylsubstituenten besitzen, bei Raumtemperatur flüssig und mit den Polyolen, insbesondere Polyetherolen, mischbar sind. Bewährt haben sich ferner alkylsubstituierte meta-Phenylendiamine der Formeln

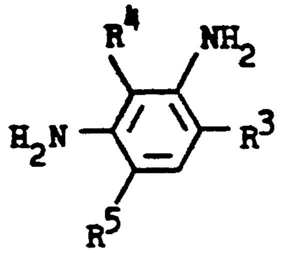

und/oder

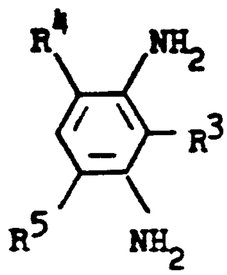

in denen $R^5$ und $R^4$ gleich oder verschieden sind und einen Methyl-, Ethyl-, Propyl-, Isopropylrest oder Butylreste bedeuten und $R^3$ ein Alkylrest mit 4 bis 12, vorzugsweise ein verzweigter Alkylrest mit 4 bis 8 Kohlenstoffatomen ist. Insbesondere bewährt haben sich solche Alkylreste $R^3$, bei denen die Verzweigungsstelle am $C^1$-Kohlenstoffatom sitzt. Als Reste $R^3$ seien beispielhaft genannt der 1-Methyl-octyl-, 2-Ethyl-octyl-, 1-Methyl-hexyl-, 1,1-Dimethyl-pentyl, 1,3,3,-Trimethyl-hexyl-, 1-Ethyl-pentyl-, 2-Ethyl-pentyl-und vorzugsweise der Cyclohexyl-, 1-Methyl-n-propyl-, tert-Butyl-, 1-Ethyl-n-propyl-, 1-Methyl-n-butyl- und 1,1-Dimethyl-n-propylrest.

Als alkylsubstituierte m-Phenylendiamine kommen beispielsweise in Betracht: 2,4-Dimethyl-6-cyclohexyl-, 2-Cyclohexyl-4,6-diethyl-, 2-Cyclohexyl-2,6-isopropyl-, 2,4-Di-methyl-6-(1-ethyl-n-propyl)-, 2,4-Dimethyl-6-(1,1-dimethyl-n-propyl)-, 2-(1-Methyl-n-butyl)-4,6-dimethyl-phenylendiamin-1,3. Vorzugsweise verwendet werden 2,4-Dimethyl-6-tert-butyl-, 2,4-Dimethyl-6-isooctyl- und 2,4-Dimethyl-6-cyclohexyl-phenylendiamin-1,3.

Geeignete 3,3',5,5'-tetra-n-alkylsubstituierte 4,4'-Diaminodiphenylmethane sind beispielsweise 3,3',5,5'-Tetra-methyl-, -Tetraethyl- und -Tetra-n-propyl-4,4'-diamino-diphenylmethan.

Vorzugsweise verwendet werden Diamino-diphenylmethane der Formel

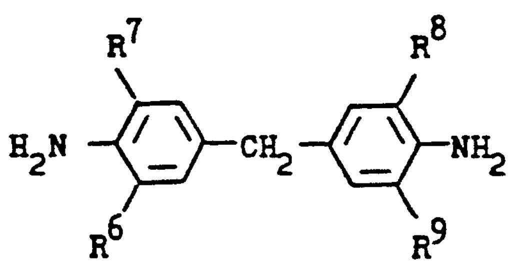

in der $R^6$, $R^7$, $R^8$ und $R^9$ gleich oder verschieden sind und einen Methyl-, Ethyl-, Propyl-, Isopropyl-, sek -Butyl-und tert -Butylrest bedeuten, wobei jedoch mindestens einer der Reste ein Isopropyl- oder sek -Butylrest sein muß. Die 4,4'-Diamino-diphenylmethane können auch im Gemisch mit Isomeren der Formeln

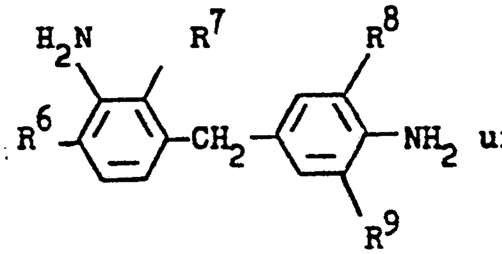
und/oder
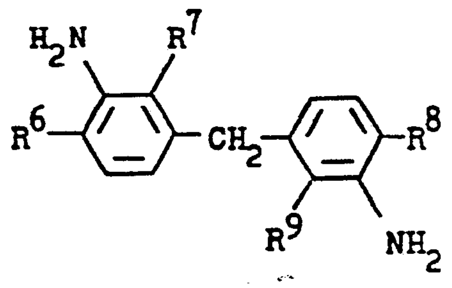

verwendet werden wobei $R^6$ $R^7$ $R^8$ und $R^9$ die obengenannte Bedeutung haben.

Beispielhaft genannt seien: 3,3',5-Trimethyl-5'-isopropyl-, 3,3',5-Triethyl-5'-isopropyl-, 3,3',5-Trimethyl-5'-sek-butyl-, 3,3',5-Triethyl-5'-sek-butyl-4,4'-diamino-diphenylmethan, 3,3'-Dimethyl-5,5'-diisopropyl-, 3,3'-Diethyl-5,5'-diisopropyl-, 3,3'-Dimethyl-5,5'-di-sek-butyl-, 3,3'-Diethyl-5,5'-di-sek-butyl-, 3,5-Dimethyl-3',5'-diisopropyl-, 3,5-Diethyl-3',5'-diisopropyl-, 3,5'-Dimethyl-3',5-di-sek-butyl-, 3,5-Diethyl-3',5'-di-sek-butyl-4,4-diamino-diphenylmethan, 3-Methyl-3',5,5'-triisopropyl-, 3- Ethyl-3',5,5'-triisopropyl-, 3-Methyl-3',5,5'-tri-sek-butyl-, 3-Ethyl-3',5,5'-tri-sek-butyl-4,4'-diamino-diphenylmethan, 3,3'-Diisopropyl-5,5'-di-sek-butyl-, 3,5-Diisopropyl-3',5'-di-sek-butyl-, 3-Ethyl-5-sek-butyl-3',5'-diisopropyl-, 3-Methyl-5-tert-butyl-3',5'-diisopropyl-, 3-Ethyl-5-sek-butyl-3'-methyl-5'-tert-butyl-, 3,3',5,5'-Tetraisopropyl- und 3,3',5,5'-Tetra-sek-butyl-4,4'-diaminodiphenylmethan. Vorzugsweise verwendet werden 3,5-Dimethyl-3',5'-diisopropyl- und 3,3',5,5'-Tetraisopropyl-4,4'-diamino-diphenylmethan. Die Diamino-diphenylmethane können einzeln oder in Form von Mischungen eingesetzt werden.

Die genannten Kettenverlängerungsmittel können einzeln oder als Mischungen von gleichen oder verschiedenen Arten verwendet werden.

Die Kettenverlängerungsmittel oder deren Mischungen kommen beim erfindungsgemäßen Verfahren in Mengen von 2 bis 60 Gew.-; vorzugsweise 8 bis 50 Gew.-% und insbesondere 10 bis 40 Gew.-%, bezogen auf das Gesamtgewicht der Polyole und Kettenverlängerungsmittel zum Einsatz.

Zu Treibmitteln, welche im erfindungsgemäßen Verfahren gegebenenfalls verwendet werden können, gehört Wasser, das mit Isocyanatgruppen unter Bildung von Kohlendioxid reagiert. Die Wassermengen, die zweckmäßigerweise verwendet werden können, betragen 0,5 bis 2 Gew.-%, bezogen auf das Gewicht an Polyol.

Andere verwendbare Treibmittel sind niedrig siedende Flüssigkeiten, die unter dem Einfluß der exothermen Polyadditionsreaktion verdampfen. Geeignet sind Flüssigkeiten, welche gegenüber dem organischen Polyisocyanat inert sind und Siedepunkte unter 100°C aufweisen. Beispiele derartiger, vorzugsweise verwendeter Flüssigkeiten sind halogenierte Kohlenwasserstoffe, wie Methylenchlorid, Trichlorfluormethan, Dichlordifluormethan, Dichlormonofluormethan, Dichlortetrafluorethan und 1,1,2-Trichlor-1,2,2-trifluorethan.

Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung von zellhaltigen Polyurethan- oder Polyurethan-Polyharnstoff-Formkörpern hängt ab von der Dichte, die man erreichen will sowie gegebenenfalls von der Mitverwendung von Wasser. Im allgemeinen liefern Mengen von 0,5 bis 15 Gew.-Teilen, bezogen auf 100 Gew.-Teile Polyol, zufriedenstellende Ergebnisse.

Der Reaktionsmischung können gegebenenfalls auch noch Hilfs- und Zusatzstoffe einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin oder stearinsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester und Türkischrotöl und Zellregler, wie Paraffine, Fettalkohole und Dimethylpolysiloxane. Die oberflächenaktiven Substanzen werden üblicherweise in Mengen von 0,01 bis 5 Gewichtsteilen, bezogen auf 100 Gewichtsteilen Polyol angewandt.

Als Füllstoffe, insbesondere verstärkend wirkende Füllstoffe sind die an sich bekannten üblichen organischen und anorganischen Füllstoffe, Verstärkungsmittel, Beschwerungsmittel, Mittel zur Verbesserung des Abriebverhaltens in Anstrichfarben, Beschichtungsmitteln usw. zu verstehen. Im einzelnen seien

beispielhaft genannt: anorganische Füllstoffe wie silikatische Mineralien, beispielsweise Schichtsilikate, wie Antigorit, Serpentin, Hornblenden, Amphibole, Chrisotil, Talkum; Metalloxide, wie Kaolin, Aluminiumoxide, Titanoxide und Eisenoxide, Metallsalze wie Kreide, Schwerspat und anorganische Pigmente, wie Cadmiumsulfid, Zinksulfid sowie Glas, Asbestmehl u.a. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Asbest, Wollastonit und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und vorzugsweise Pfropfpolymerisate auf Styrol-Acrylnitrilbasis, die durch in situ Polymerisation von Acrylnitril-Styrol-Mischungen in Polyetherolen analog den Angaben der deutschen Patentschriften 11 11 394, 12 22 669, (US 33 04 273, 33 83 351, 35 23 093) 11 52 536 (GB 1 040 452) und 11 52 537 (GB 987 618) hergestellt werden sowie Fillerpolyole, bei denen wäßrige Polymerdispersionen in Polyoldispersionen übergeführt werden.

Die anorganischen und organischen Füllstoffe können einzeln oder als Gemische verwendet werden. Vorzugsweise Anwendung finden stabile Füllstoff-Polyol-Dispersionen, bei denen die Füllstoffe in Gegenwart von Polyolen in situ mit hohen örtlichen Energiedichten auf eine Teilchengröße kleiner als 7 µm zerkleinert und hierbei gleichzeitig dispergiert werden. Füllstoff-Polyol-Dispersionen dieser Art werden beispielsweise in den deutschen Offenlegungsschriften 28 50 609, 28 50 610 und 29 32 304 beschrieben.

Die anorganischen und organischen Füllstoffe werden der Reaktionsmischung vorteilhafterweise in Mengen von 0,5 bis 50 Gew.%, vorzugsweise 1 bis 40 Gew.%, bezogen auf das Gewicht der Polyisocyanat-Polyol-Mischung einverleibt.

Geeignete Flammschutzmittel sind beispielsweise Trikresylphosphat, Tris-2-chlorethylphosphat, Trischlorpropylphosphat und Tris-2,3-dibrompropylphosphat.

Außer den bereits genannten halogensubstituierten Phosphaten können auch anorganische Flammschutzmittel, wie Aluminiumoxidhydrat, Antimontrioxid, Arsenoxid, Ammoniumpolyphosphat und Calciumsulfat sowie Veresterungsprodukte niedermolekularer Polyole und halogenierter Phthalsäurederivaten zum Flammfestmachen der Formkörper verwendet werden. Im allgemeinen hat es sich als zweckmäßig erwiesen, 5 bis 50 Gewichtsteile, vorzugsweise 5 bis 25 Gewichtsteile der genannten Flammschutzmittel für jeweils 100 Gewichtsteile an Polyol zu verwenden.

Nähere Angaben über die obengenannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, zu entnehmen.

Zur Herstellung der gegebenenfalls zellhaltigen Polyurethan- oder Polyurethan-Polyharnstoff-Formkörper werden die organischen Polyisocyanate, Polyole und Kettenverlängerungsmittel in solchen Mengen zur Umsetzung gebracht, daß das Verhältnis von NCO-Gruppen zu Zerewitinoff aktiven Wasserstoffatomen, gebunden an OH-, -$NH_2$ und -NHR-Gruppen 1:0,90 bis 1,25, vorzugsweise 1:0,95 bis 1,15 beträgt.

Die Herstellung der zellhaltigen und vorzugsweise kompakten Polyurethan- oder Polyurethan-Polyharnstoff-Formkörper erfolgt vorzugsweise im one shot-Verfahren nach der bekannten Reaktionsspritzguß-Technik. Diese Verfahrensweise wird beispielsweise beschrieben von Piechota und Röhr in "Integralschaumstoff", Carl-Hanser-Verlag, München, Wien 1975; D.J. Prepelka und J.L. Wharton in Journal of Cellular Plastics, März/ April 1975, Seiten 87 bis 98 und U. Knipp in Journal of Cellular Plastics, März/April 1973, Seiten 76 bis 84.

Bei Verwendung einer Mischkammer mit mehreren Zulaufdüsen können die Ausgangskomponenten einzeln zugeführt und in der Mischkammer intensiv vermischt werden. Als besonders vorteilhaft hat es sich erwiesen nach dem Zweikomponenten-Verfahren zu arbeiten und die Kettenverlängerungsmittel in den Polyolen zu lösen und mit den Katalysatoren und gegebenenfalls Treibmitteln, Hilfs- und Zusatzstoffen in der Komponente A zu vereinigen und als Komponente B die organischen Polyisocyanate zu verwenden. Vorteilhaft ist hierbei beispielsweise, daß die Komponenten A und B getrennt gelagert und raumsparend transportiert werden können und bei der Verarbeitung nur noch in den entsprechenden Mengen gemischt werden müssen.

Die Menge des in die Form eingebrachten Reaktionsgemisches wird so bemessen, daß die erhaltenen mikrozellularen bzw. kompakten Formkörper eine Dichte von 0,8 bis 1,4 g/$cm^3$, vorzugsweise von 0,9 bis 1,35 g/$cm^3$ und die zellhaltigen Formkörper eine Dichte von 0,1 bis 0,8 g/$cm^3$, vorzugsweise von 0,15 bis 0,6 g/$cm^3$ aufweisen. Die Ausgangskomponenten werden mit einer Temperatur von 15 bis 70°C, vorzugsweise von 20 bis 55°C in die Form eingebracht. Die Formtemperatur beträgt zweckmäßigerweise 20 bis 90°C, vorzugsweise 40 bis 85°C, gegebenenfalls kann es vorteilhaft sein, übliche Formtrennmittel, beispielsweise auf Wachs- oder Silikonbasis, zur Verbesserung der Entformung, einzusetzen. Die Verdichtungsgrade zur Herstellung der zelligen Formkörper liegen zwischen 1,1 und 8.

Die nach dem erfindungsgemäßen Verfahren erhältlichen kompakten bzw. mikrozellularen Polyurethan- oder Polyurethan-Polyharnstoff-Formkörper eignen sich insbesondere zur Verwendung in der Automobilindustrie, beispielsweise als Stoßstangenabdeckungen und Karosserieteile wie Kotflügel, Spoiler und Radkästenverbreiterungen sowie technische Gehäuseteile und Laufrollen, die zellhaltigen Schaumstoffe finden beispielsweise als Schuhsohlen, Armlehnen, Kopfstützen, Sicherheitsabdeckungen im Automobilinnenraum sowie als Motorrad- und Fahrradsättel und Sitzkissen, Deckschichten in Verbundschaumstoffen Anwendung.

Die in den Beispielen genannten Teile beziehen sich auf das Gewicht.

**Beispiel 1**

Herstellung von Hexahydro-1-(3,4,5,6-tetrahydro-7H-azepin-2-yl)-1H-azepin.

Man legt 508 Teile 2-Methoxi-3,4,5,6-tetrahydro-7H-azepin (Caprolactim-0-methylether) vor, erwärmt auf 100°C und läßt bei dieser Temperatur unter Rühren 396 Teile Hexamethylenimin zutropfen. Nach beendeter Zugabe rührt man das Reaktionsgemisch noch 2 Stunden bei 135°C, wobei das bei der Reaktion gebildete Methanol praktisch vollständig abdestilliert wird. Das erhaltene Rohprodukt kann zur Reinigung gegebenenfalls unter vermindertem Druck destilliert werden.

Man erhält 708 Teile (91 % der Theorie) Produkt mit einem Siedepunkt/$_{0,4}$ von 111 -113°C.

**Beispiel 2 bis 10**

Man verfährt analog den Angaben von Beispiel 1, verwendet jedoch anstelle von Hexamethylenimin die in Tabelle 1 genannten Amine und Mengen.

Tabelle 1

| Beispiel | Amin | Menge [Teile] | monocyclisches Amidin | Ausbeute [Teile] | Physikalische Daten |
|---|---|---|---|---|---|
| 1 | Hexamethylen-imin | 396 | 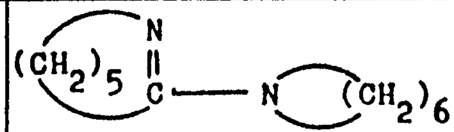 | 708 | $Kp_{0,4}$: 111-113°C |
| 2 | Ethanolamin | 244 | 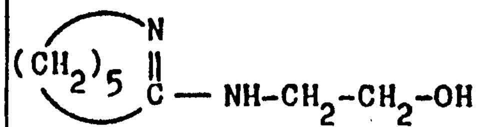 | 537 | Fp: 113-115°C |
| 3 | Diethanolamin | 420 | 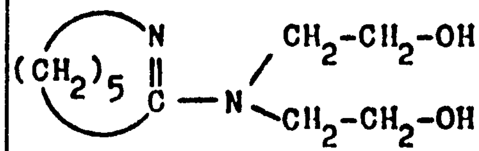 | 658 | $Kp_{0,1}$: 200°C |
| 4 | Ethylendiamin | 240 | 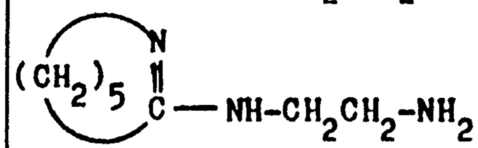 | 566 | Fp: 71-73°C |
| 5 | Ethylendiamin | 120 | 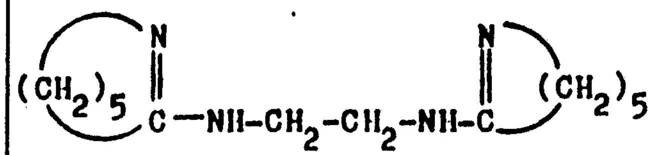 | 447 | Fp: 115°C |
| 6 | N,N-Dimethyl-ethylendiamin | 352 | 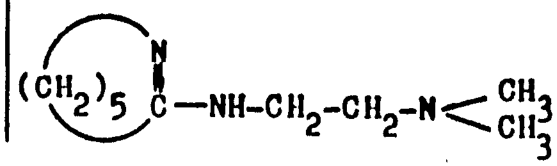 | 617 | $Kp_{2,0}$: 120-121°C |

Tabelle 1 (Fortsetzung)

| Beispiel | Amin | Menge [Teile] | monocyclisches Amidin | Ausbeute [Teile] | Physikalische Daten |
|---|---|---|---|---|---|
| 7 | Cyclohexylamin | 396 | 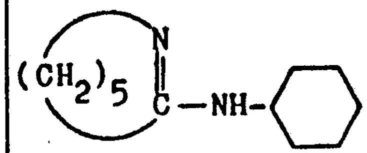 | 537 | Fp: 140-143°C |
| 8 | Morpholin | 348 | 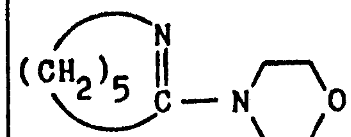 | 580 | $Kp_{1,0}$: 107-112°C |
| 9 | 4-Pyridon | 396 | 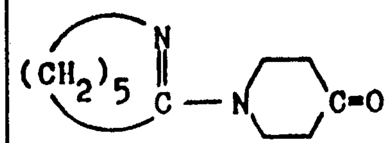 | 349 | $Kp_{1,0}$: 118-120°C |
| 10 | Anilin | 372 | 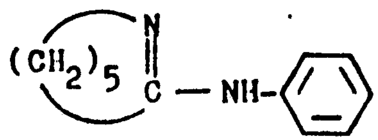 | 548 | Fp: 105-107°C |
| 11 | Cysteamin | 308 | 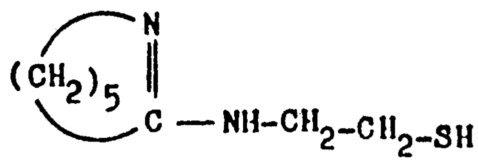 | 422 | $Kp_{0,1}$: 170°C (Badtemperatur) |

**Beispiele RIM-Materialien**

Die im folgenden beschriebenen Systemformulierungen wurden, wenn nicht anders vermerkt, mit Hochdruckdosieranlagen, in denen die Vermischung nach Art einer Gegenstromverdüsung erfolgt, nach dem RIM-Verfahren verarbeitet (Maschinen der Puromat-Reihe von Elastogran Maschinenbau/Straßlach bei München).

Für die mechanischen Prüfungen wurden Platten mit verschiedenen Abmessungen (300 x 300 bis 1000 x 4 mm bzw. 600 x 400 x 4 mm) in temperierbaren, geschlossenen Plattenformen aus Stahl oder Aluminium hergestellt. Außerdem wurden Formteile wie Automobilkotflügel, Spoiler, Motorradkotflügel, Kotflügelverbreiterungsstreifen, Stoßfängerabdeckungen u.a. in Stahl-Aluminium- und Epoxidformen hergestellt. Die Befüllung der Formen erfolgt über Stangen-, Staubalken- oder Fächerangüsse mit gegebenenfalls integrierten Nachvermischungselementen. Die Schußgewichte variierten dabei von 350 bis ca. 5000 g.

**Vergleichsbeispiel I**

65 Teile eines Blockcopolyetherols auf Basis Trimethylolpropan-Propylenoxid-Ethylenoxid mit einer OH-Zahl von 25,

35 Teile 3,3',5,5'-Tetraisopropyl-4,4'-diaminodiphenylmethan, und

0,60 Teile Diazabicyclooctan, die zuvor in einer Teilmenge des Polyols gelöst wurden, werden zu einer Polyolkomponente vermischt und mit

42,7 Teilen (entsprechend einem Index von 1,05) eines Umsetzungsproduktes aus Dipropylenglykol und 4,4'-Diphenylmethandiisocyanat mit einem Isocyanatgehalt von 23 % nach dem RIM-Verfahren mit einer Hochdruckdosieranlage vom Typ Puromat 80 verarbeitet.

Die Temperatur der Systemkomponenten beträgt 50° C, die Plattenform (500 x 300 x 4 mm) ist ebenfalls auf 50° C temperiert. Die Entformzeit beträgt 15 sec. Anschließend wird die Formplatte einem sogenannten Knicktest unterworfen. Dazu wird sie in bestimmten Zeitabständen an jeweils anderer Stelle möglichst schnell 180° umgebogen. Der Test wird so lange wiederholt, bis keinerlei Haarrisse mehr an dem gebogenen Plattenstück auftreten. Die hierbei ermittelte Zeit wird rißfrei genannt.

Die Dichte der Platten beträgt 1,05 bis 1,08 g/cm$^3$. An den Testplatten wurden die in Tabelle 2 zusammengefaßten mechanischen Meßwerte ermittelt. Die Platten wurden nach der Herstellung 1 Std. bei 120° C getempert.

Einige der Platten wurden 30 Tage bei Raumtemperatur gelagert und dann 3 Std. bei 160° getempert. Die im Zugversuch ermittelten Werte finden sich ebenfalls in Tabelle 2.

**Vergleichsbeispiel II**

65 Teile des in Vergleichsbeispiel 1 verwendeten Polyetherols und

35 Teile 3,3',5,5'-Tetraisopropyl-4,4'-diaminodiphenylmethan werden mit

1,0 Teilen einer 33 %igen Lösung von Diazabicyclooctan in Dipropylenglykol und

0,2 Teilen Dibutylzinndilaurat zu einer Polykomponente vermischt und mit

44,6 Teilen (entsprechend einem Index von 1,05) des im Vergleichsbeispiel 1 beschriebenen Isocyanatproduktes unter den ebenfalls dort angegebenen Bedingungen verarbeitet. Das Ergebnis des Knicktests sowie die mech. Eigenschaften der Platten finden sich in Tabelle 2.

**Vergleichsbeispiel III**

100 Teile der in Vergleichsbeispiel II beschriebenen Polyetherol-Diamin-Mischung werden mit

1,0 Teilen einer 33 %igen Lösung von Diazabicyclooctan in Dipropylenglykol und

0,11 Teilen einer Komplexverbindung aus 2,3-Dimethyl-3,4,5,6-tetrahydropyrimidin und Dibutylzinndilaurat im Molverhältnis 1 : 1 zu einer Polyolkomponente vereinigt und mit

44,6 Teilen (entsprechend einem Index von 1,05) des im Vergleichsbeispiel I beschriebenen Isocyanatproduktes unter den dort angegebenen Bedingungen verarbeitet. Das Ergebnis des Knicktests sowie die mechanischen Eigenschaften der Testplatten finden sich in Tabelle 2.

**Beispiele 12 bis 17**

Die Beispiele 12 bis 17 werden analog den Angaben des Vergleichsbeispiels III hergestellt, wobei die monocyclischen Amidine und Metallverbindungen (b) als Einzelkomponenten oder in Form von Komplexen der Polyetherol-Diamin-Mischung einverbleibt werden. Die eingesetzten Katalysatoren, deren Mengen und die an den erhaltenen Formplatten ermittelten Eigenschaften sind in Tabelle 2 zusammengefaßt.

Tabelle 2 Beispiele 12—17, Vergleichsbeinspiele I—III
Abhängigkeit des Knicktests vom Katalysatorsystem

| Beispiel Nr. | mono-cycl. nach Beispiel Nr | Amidine (Gew.-% im polyol) | Amidine Zugabeart | Cokatalysator[a] Typ | Cokatalysator (Gew.-% im Polyol) | MV (xB:100A) | t rißfrei[b] (sec.) | Reißfestigk. (N/mm²) | Reißdehnung (%) | Weiterreißfestigkeit (N/mm) | Härte (Shore D) |
|---|---|---|---|---|---|---|---|---|---|---|---|
| Vergleich I[c] | — | — | — | A | 0,60 | 42,7 | 60 | 24,4(13,5)[d] | 230(230)[d] | 84,4 | 63 |
| Vergleich II | — | — | — | A | 0,33<br>0,20 | 44,6 | 15 | 33,3(8,4) | 230(20) | 103,4 | 64 |
| Vergleich III | [e] | 0,03 | Sn-Komplex | B<br>A | 0,08<br>0,33 | 44,6 | 35 | — | — | — | — |
| 12 | 1 | 0,04 | Sn-Komplex | B | 0,06 | 42,7 | 25 | 27,5(24,8) | 250(350) | 84,1 | 62 |
| 13 | 1 | 0,04 | Sn-Komplex | B<br>A | 0,06<br>0,33 | 44,6 | 20 | — | — | — | — |
| 14 | 1 | 0,04 | getrennt | B<br>A | 0,06<br>0,33 | 44,6 | 20 | — | — | — | — |
| 15 | 3 | 0,04 | Sn-Komplex | B | 0,06 | 42,7 | 35 | 25,0 | 250 | 83,9 | 62 |
| 16 | 10 | 0,04 | getrennt | B | 0,06 | 44,6 | 20 | — | — | — | — |
| 17 | 7 | 0,04 | getrennt | B | 0,06<br>0,33 | 44,6 | 20 | — | — | — | — |

[a] Cokatalysatoren: A = Diazabicyclooctan; B = Dibutylzinnlaurat
[b] gemessen mit Knicktest;
[c] entformte Platten hatten häufig Risse;
[d] eingeklammer Werte: nach 4 Wochen Lagerung und anschließende Temperung 3 Std./160°
[e] 2,3-Dimethyl-3,4,5,6-tetrahydropyrimidin als Sn-Komplex gemäß DAS 26 22 951, Beispiel 1

**Beispiele für Schuhsohlen-Materialien**

Die im folgenden beschriebenen Systemformulierungen wurden mit einer Niederdruck-Schäummaschine vom Typ EMB F 20 ST der Elastogran Maschinenbau zu Prüfplatten mit den Abmessungen 200 x 200 x 10 mm verarbeitet. Die Temperatur der Polyol- und Isocyanat-Komponente betrug 25°C, die Temperatur der Aluminiumform 50° C.

Zur Durchführung des Knicktests werden die Prüfplatten nach 2,5 min entformt und in Abständen von 15 sec an jeweils verschiedenen Stellen möglichst schnell um 180° umgebogen. Der Test wird so lange wiederholt, bis keinerlei Haarrisse mehr an dem gebogenen Plattenstück auftreten (ᵗ rißfrei).

Die Rohdichte der Prüfplatten beträgt 0,5 g/$cm^3$; die mechanischen Eigenschaftswerte finden sich in Tabelle 3.

**Vergleichsbeispiel IV**

83,15 Teile einer Füllstoff-Polyetherol-Dispersion, hergestellt durch Naßmahlung von 15 Gew.-% Talkum in einem Gemisch aus 70 Teilen eines Blockcopolyetherols auf Basis Dipropylenglykol-Propylenoxid-Ethylenoxid mit einer OH-Zahl von 29 und 30 Teilen eines Blockcopolyetherols auf Basis Trimethylolpropan-Propylenoxid-Ethylenoxid mit einer OH-Zahl von 35,
6,29 Teile Butandiol-1,4,
0,78 Teile Ethylenglykol,
1,68 Teile einer 25 %igen Lösung von Diazabicyclooctan in Butandiol-1,4,
0,10 Teile Silikonöl DC 193 (DOW CORNING),
0,025 Teile Dibutylzinndilaurat und
7,93 Teile Trichlor-fluormethan werden zu einer Polyolkomponente vermischt
und mit 44, 45 bzw. 46 Teilen der in Vergleichsbeispiel 1 beschriebenen Isocyanatkomponente verarbeitet. Das Ergebnis des Knicktests sowie die nach RAL-RG 702/1 gemessenen mechanischen Eigenschaften der Prüfplatten finden sich in Tabelle 3.

**Vergleichsbeispiel V**

Der in Vergleichsbeispiel IV beschriebenen Polyolkomponente werden 0,05 Teile eines Salzes aus Octansäure und 1,8-Diazabicyclo [5.4.0] undecen (Polycat SA No. 102 von Fa. Sanyo Abbott) zugesetzt. Die Verarbeitung erfolgt analog Vergleichsbeispiel IV. Die erhaltenen mechanischen Eigenschaften sind in Tabelle 3 zusammengefaßt.

**Beispiel 18**

Der in Vergleichsbeispiel IV beschriebenen Polyolkomponente werden 0,05 Teile eines Salzes aus Octansäure und des monocyclischen Amidins nach Beispiel 1 zugesetzt. Die Verarbeitung erfolgt wie in Vergleichsbeispiel IV beschrieben. Die erhaltenen mechanischen Eigenschaften sind in Tabelle 3 zusammengefaßt.

**Tabelle 3**

Bestimmung von $t_{rißfrei}$ (Knicktest) an Prüfplatten aus Schuhsohlenmaterial

*Tabelle 3:*
Bestimmung von $t_{rißfrei}$ (Knicktest) an Prüfplatten aus Schuhsohlenmaterial

| Vergleichsbeispiel Beispiel Nr | MV (xB:100A) | $t_{rißfrei}$ (min) |
|---|---|---|
| IV | 44 | 6 |
| | 45 | 5 |
| | 46 | 6 |
| V | 44 | 4,5 |
| | 45 | 4 |
| | 46 | 4 |
| 18 | 44 | 3,75 |
| | 45 | 3,5 |
| | 46 | 3,5 |

**Vergleichsbeispiele VI bis XIII**

Polyolkomponente:
68,1 Teile eines Blockcopolyetherols auf Basis Dipropylenglykol-Propylenoxid-Ethylenoxid mit einer OH-Zahl von 29,
12,3 Teile eines Blockcopolyetherols auf Basis Glycerin-Propylenoxid-Ethylenoxid mit einer OH-Zahl von 25,
4,5 Teile eines Blockcopolyetherols auf Basis Glycerin-Propylenoxid-Ethylenoxid mit einer OH-Zahl von 35,
7,3 Teile Butandiol-1.4,
0,5 Teil Ethylenglykol,
1,6 bzw.
1,0 Teile einer 25%-igen Lösung von Diazabicyclooctan in Butandiol-1,4,
0,1 Teil einer 50%-igen Lösung von Wasser in sulfoniertem Ricinusöl,
0,005 bzw.
0,016 Teil Dibutylzinndilaurat,
0,1 Teil Silikonöl DC 193 (Dow Corning) und
5,5 Teile Trichlorfluormethan
werden intensiv vermischt und als Polyolkomponente verwendet.

Polyisocyanatkomponente:
Umsetzungsprodukt aus Dipropylenglykol und 4,4'-Diphenyl-methan-diisocyanat mit einem NCO-Gehalt von 23%.

Zur Herstellung der Formteile werden die Systemkomponenten analog den Angaben in Vergleichsbeispiel 1 zur Reaktion gebracht.

Die Mischungsverhältnisse von Polyol:
Polyisocyanatkomponente, die wirksamen Katalysatormengen und die an den Formteilen ermittelten $t_{rißfrei}$-Werte sind in Tabelle 4 zusammengefaßt.

*Tabelle 4*
*Vergleichsbeispiele VI bis XIII*

Knicktest von Prüfplatten aus Schuhsohlenmaterialien

| Vergleichsbeispiel | | VI | VII | VIII | IX | X | XI | XII | XIII |
|---|---|---|---|---|---|---|---|---|---|
| Polyolkomponente | [Teile] | 100 | 100 | 100 | 100 | 100 | 100 | 100 | 100 |
| Polyisocyanat komponente | [Teile] | 46 | 47 | 46 | 47 | 46 | 47 | 46 | 47 |
| Diazabicyclooctan | [Teile] | 0,40 | 0,40 | 0,25 | 0,25 | 0,25 | 0,25 | 0,25 | 0,25 |
| Dibutylzinndilaurat | [Teile] | 0,005 | 0,005 | 0,016 | 0,016 | 0,076 | 0,076 | 0,076 | 0,076 |
| $t_{rißfrei}$ | [Minuten] | 6,0 | 5,75 | 6,0 | 6,25 | 4,25 | 4,25 | 4,25 | 4,25 |

**Beispiele 19 bis 42**

Man verfährt analog den Angaben der Vergleichsbeispiele VI bis XIII, fügt der Polyolkomponente jedoch als Katalysator zusätzlich noch monocyclische Amidine oder Amidin-Dibutylzinndilaurat-Komplexe bei.

Die Art und Menge der verwendeten Amidine oder Komplexe, die Mischungsverhältnisse von Polyol: Polyisocyanatkomponente und die an den Formteilen ermittelten $t_{rißfrei}$-Werte sind in Tabelle 5 zusammengefaßt.

In Tabelle 5 bedeutet der Asteriskus, daß als Katalysator ein Komplex aus 0,06 Teilen Dibutylzinndilaurat und 0,04 Teilen des genannten Amidins eingesetzt wurde, der in einem separaten Verfahrensschritt hergestellt wurde.

Tabelle 5

Beispiele 19 bis 42

Knicktest von Prüfplatten aus Schuhsohlenmaterial

| Beispiele | | 19 | 20 | 21 | 22 | 23 | 24 | 25 | 26 | 27 | 28 | 29 | 30 |
|---|---|---|---|---|---|---|---|---|---|---|---|---|---|
| Polyolkomponente | [Teile] | 100 | 100 | 100 | 100 | 100 | 100 | 100 | 100 | 100 | 100 | 100 | 100 |
| Polyisocyanatkomponente | [Teile] | 46 | 47 | 46 | 47 | 46 | 47 | 46 | 47 | 46 | 47 | 46 | 47 |
| Diazabicyclooctan | [Teile] | 0,40 | 0,40 | 0,25 | 0,25 | 0,25 | 0,25 | 0,25 | 0,25 | 0,40 | 0,40 | 0,25 | 0,25 |
| Dibutylzinndilaurat | [Teile] | 0,005 | 0,005 | 0,016 | 0,016 | 0,076 | 0,076 | 0,016 | 0,016 | 0,005 | 0,005 | 0,016 | 0,016 |
| 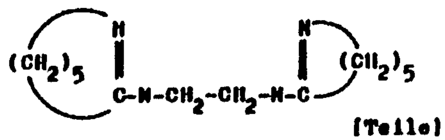 | [Teile] | 0,10 | 0,10 | 0,10 | 0,10 | 0,04 | 0,04 | 0,1* | 0,1* | - | - | - | - |
| 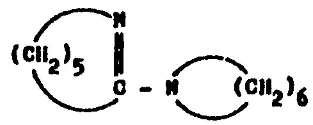 | [Teile] | - | - | - | - | - | - | - | - | 0,10 | 0,10 | 0,10 | 0,10 |
| 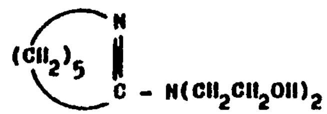 | [Teile] | - | - | - | - | - | - | - | - | - | - | - | - |
| $t_{rißfrei}$ | [Minuten] | 4,5 | 4,75 | 4,75 | 5,0 | 3,5 | 3,75 | 2,75 | 2,75 | 5,25 | 5,0 | 5,0 | 4,75 |

<u>Tabelle 5</u> (Fortsetzung)

| Beispiele | | 31 | 32 | 33 | 34 | 35 | 36 | 37 | 38 | 39 | 40 | 41 | 42 |
|---|---|---|---|---|---|---|---|---|---|---|---|---|---|
| Polyolkomponente | [Teile] | 100 | 100 | 100 | 100 | 100 | 100 | 100 | 100 | 100 | 100 | 100 | 100 |
| Polyisocyanatkomponente | [Teile] | 46 | 47 | 46 | 47 | 46 | 47 | 46 | 47 | 46 | 47 | 46 | 47 |
| Diazabicyclooctan | [Teile] | 0,25 | 0,25 | 0,25 | 0,25 | 0,40 | 0,40 | 0,25 | 0,25 | 0,25 | 0,25 | 0,25 | 0,25 |
| Dibutylzinndilaurat | [Teile] | 0,076 | 0,076 | 0,016 | 0,016 | 0,005 | 0,005 | 0,016 | 0,016 | 0,076 | 0,076 | 0,016 | 0,016 |
| 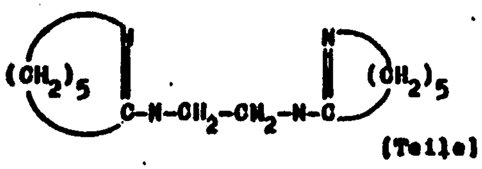 | [Teile] | - | - | - | - | - | - | - | - | - | - | - | - |
| 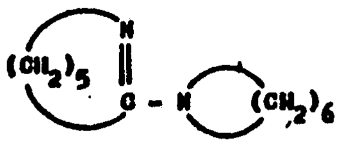 | [Teile] | 0,04 | 0,04 | 0,1+ | 0,1+ | - | - | - | - | - | - | - | - |
| 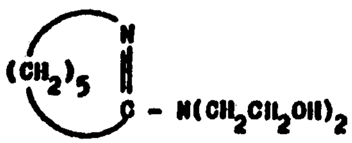 | [Teile] | - | - | - | - | 0,10 | 0,10 | 0,10 | 0,10 | 0,04 | 0,04 | 0,1+ | 0,1+ |
| $t_{rißfrei}$ | [Minuten] | 3,25 | 3,25 | 2,75 | 2,5 | 4,75 | 5,0 | 4,75 | 4,75 | 4,0 | 4,0 | 3,0 | 2,75 |

**Patentansprüche**

1. Verfahren zur Herstellung von gegebenenfalls zellhaltigen Polyurethan- oder Polyurethan-Polyharnstoff-Formkörpern durch Umsetzung von aromatischen Polyisocyanaten, Polyolen und Kettenverlängerungsmitteln in Gegenwart von Katalysatoren sowie gegebenenfalls Treibmitteln, Hilfs- und Zusatzstoffen, dadurch gekennzeichnet, daß man als Katalysatoren Katalysatorsysteme verwendet, die bestehen aus

A) monocyclischen Amidinen der Formel

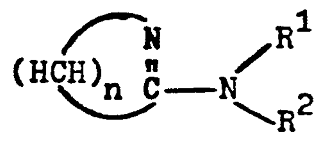

(I)

in der bedeuten:

$R^1$: Wasserstoff oder $R^2$

$R^2$ einen linearen oder verzweigten Alkylrest mit 1 bis 20 C-Atomen,

einen linearen oder verzweigten OH-, $NH_2$-, -NH- und/oder SH-gruppenhaltigen Alkylrest mit 1 bis 20 C-Atomen,

einen Cycloalkylrest mit 5 bis 12 C-Atomen, in dem eine oder mehrere Methylengruppen durch -O-, -CO-, -S- oder -NH- Brückenglieder substituiert sein können,

einen mit linearen oder verzweigten Alkylgruppen mit 1 bis 6 C-Atomen, einem Cyclohexylrest, OH-, NH - oder SH-Gruppen substituierten Cycloalkylrest mit 5 bis 12 C-Atomen, bei dem eine oder mehrere Methylengruppen durch -O-, -S- oder -NH- Brückenglieder substituiert sein können,

einen aromatischen Rest mit 6 bis 15 C-Atomen, einen mit linearen oder verzweigten Alkylgruppen mit 1 bis 6 C-Atomen, OH-, $NH_2$ -, $-NH-CH_3$, $-N(CH_3)_2$ - oder SH-Gruppen substituierten aromatischen Rest mit 6 bis 15 C-Atomen,

einen Aralkylrest mit 7 bis 11 C-Atomen, wobei die Reste $R^1$ und $R^2$ gleich oder verschieden sind oder beide gemeinsam einen Ring mit 4 bis 12 C-Atomen bilden, in dem eine oder mehrere Methylengruppen durch -O-, -S-, -NH-, -CO- Brückenglieder substituiert sein können und der gegebenenfalls als Substituenten lineare oder verzweigte Alkylreste mit 1 bis 6 C-Atomen oder Carbonsäureestergruppen gebunden enthält und

n eine ganze Zahl von 3 bis 12 ist.

und

B) Cokatalysatoren aus der Gruppe der

a) tertiären Amine,

b) Metallverbindungen der Formel

$Me\ X_n\ Y_m$ (II)

wobei

Me ein (n + m)wertiges Metall bedeutet, und

X für einen aliphatischen Kohlenwasserstoffrest mit 1 bis 18 Kohlenstoffatomen, einen aromatischen Kohlenwasserstoffrest mit 6 bis 10 Kohlenstoffatomen oder einen araliphatischen Kohlenwasserstoffrest mit 7 bis 15 Kohlenstoffatomen,

Y für einen gegebenenfalls olefinische Doppelbindungen und/oder alkoholische Hydroxylgruppen aufweisenden aliphatischen Carboxylatrest mit 2 bis 18 Kohlenstoffatomen oder einem Enolatrest mit 5 bis 18 Kohlenstoffatomen,

n für eine ganze Zahl zwischen 0 und 2 und

m für eine ganze Zahl zwischen 0 und 4 stehen mit der Einschränkung, daß die Summe (n + m) gleich 2 bis 4 ergibt, und,

c) gegebenenfalls olefinisch ungesättigte Doppelbindungen und/oder hydroxylgruppenhaltigen aliphatischen Carbonsäuren mit 2 bis 18 C-Atomen

oder Mischungen aus mindestens 2 der genannten Cokatalysatoren,

und die Ausgangskomponenten mit Hilfe der Reaktionsspritzgußtechnik zu Formkörpern verarbeitet.

2. Verfahren nach Anspruch 1, dadurch gekennzeichnet, daß man die monocyclischen Amidine der Formel (I) und die Metallverbindungen (b) der Formel (II) oder aliphatischen Carbonsäuren (c) im Molverhältnis 0,5 bis 5: 1 verwendet.

3. Verfahren nach Anspruch 1, dadurch gekennzeichnet, daß man als Katalysatorsysteme Mischungen aus monocyclischen Amidinen, tertiären Aminen (a) und Metallverbindungen (b) der Formel (II) verwendet.

4. Verfahren nach Anspruch 1, dadurch gekennzeichnet, daß als Katalysatorsystem eine Mischung verwendet wird, die besteht aus:

0,001 bis 5,0 Gew.-Teilen monocyclisches Amidin,

0,005 bis 5,0 Gew.-Teilen tertiäres Amin (a) und

0,001 bis 2,5 Gew.-Teilen Metallverbindung (b) der Formel (II) pro 100 Gew.-Teile Polyol.

**Claims**

1. A process for the preparation of cellular or non-cellular molded parts of polyurethane or polyurethane-polyurea by reacting an aromatic polyisocyanate, a polyol and a chain extender in the presence of a catalyst and in the presence or absence of blowing agents, auxiliaries and additives, wherein there is used, as catalyst, a catalyst system consisting of

(A) a monocyclic amidine of the formula

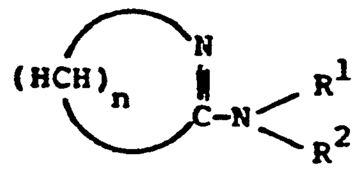

(I)

where

$R^1$ is hydrogen or $R^2$,

$R^2$ denotes a linear or branched alkyl radical of 1 to 20 carbon atoms,

a linear or branched OH-, $NH_2$-, -NH- and/or SH-group-containing alkyl radical of 1 to 20 carbon atoms,

a cycloalkyl radical of 5 to 12 carbon atoms in which one or more methylene groups may be substituted by -O-, -CO-, -S- or -NH- bridge members, a cycloalkyl radical of 5 to 12 carbon atoms which is substituted by linear or branched alkyl groups of 1 to 6 carbon atoms, a cyclohexyl radical, OH, $NH_2$ or SH groups, and in which one or more methylene groups may be substituted by -O-, -S- or -NH- bridge members,

an aromatic radical of 6 to 15 carbon atoms,

an aromatic radical of 6 to 15 carbon atoms substituted by linear or branched alkyl groups of 1 to 6 carbon atoms, OH, $NH_2$, $-NH-CH_3$, $-N(CH_3)_2$ or SH groups,

an aralkyl radical of 7 to 11 carbon atoms,

the radicals $R^1$ and $R^2$ are identical or different, or together form a ring with 4 to 12 carbon atoms, in which one or more methylene groups may be substituted by -O-, -S-, -NH-, -CO- bridge members and which optionally contains linear or branched alkyl radicals of 1 to 6 carbon atoms or carboxylic acid ester groups in bonded form as substituents, and

n is an integer from 3 to 12, and

(B) a co-catalyst selected from the group consisting of

a) tertiary amines,

b) metal compounds of the formula

$Me\ X_nY_m$ (II),

where

Me denotes an $(n + m)$-valent metal,

X is an aliphatic hydrocarbon radical of 1 to 18 carbon atoms, an aromatic hydrocarbon radical of 6 to 10 carbon atoms or an araliphatic hydrocarbon radical of 7 to 15 carbon atoms,

Y stands for an aliphatic carboxylate radical of 2 to 18 carbon atoms optionally containing olefinic double bonds and/or alcoholic hydroxyl groups, or an enolate radical of 5 to 18 carbon atoms,

n is an integer from 0 to 2, and

m is an integer from 0 to 4, with the proviso that the sum of $(n + m)$ is 2 to 4, and

c) aliphatic carboxylic acids of 2 to 18 carbon atoms optionally containing olefinically unsaturated double bonds and/or hydroxyl groups, or a mixture of at least 2 of the said co-catalysts, and the starting components are processed into molded parts by a reaction injection molding technique.

2. A process as claimed in claim 1, wherein the monocyclic amidines of the formula (I) and the metal compounds (b) of the formula (II) or aliphatic carboxylic acids (c) are used in a molar ratio of 0.5 to 5:1.

3. A process as claimed in claim 1, wherein mixtures of monocyclic amidines, tertiary amines (a) and metal compounds (b) of the formula (II) are used as catalyst systems.

4. A process as claimed in claim 1, wherein there is used, as catalyst system, a mixture consisting of

0.001 part to 5.0 parts by weight of a monocyclic amidine,

0.005 part to 5.0 parts by weight of a tertiary amine (a), and

0.001 part to 2.5 parts by weight of a metal compound (b) of the formula (II)

per 100 parts by weight of polyol.

**Revendications**

1.- Procédé de préparation de corps moulés de polyuréthane ou polyuréthane-polyurée, éventuellement cellulaires, par réaction de polyisocyanates, polyols et allongeurs de chaîne aromatiques, en présence de

catalyseurs, ainsi que, éventuellement, de gonflants, auxiliaires et additifs, caractérisé par le fait que l'on utilise, comme catalyseurs, des systèmes catalytiques qui sont constitués de

A) Amidines monocycliques de formule

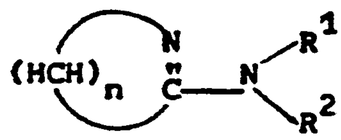

(I)

dans laquelle

$R^1$: représente hydrogène ou $R^2$

$R^2$: -un reste alkyle linéaire ou ramifié à 1 à 20 atomes C,

- un reste alkyle à 1 à 20 atomes C, linéaire ou ramifié, à groupes OH, $NH_2$, NH et/ou SH,

- un reste cycloalkyle à 5 à 12 atomes C dans lequel un ou plusieurs groupes méthylène peuvent être substitués par des chaînons pontaux -O-, -CO-, -S- ou -NH-,

- un groupe alkyle linéaire ou ramifié, à 1 à 6 atomes C, un reste cyclohexyle, un reste cycloalkyle à 5 à 12 atomes C substitués par des groupes OH, $NH_2$ ou SH, dans lequel un ou plusieurs groupes méthylène peuvent être substitués par des chaînons pontaux O, S ou NH,

- un reste aromatique de 6 à 15 atomes C,

- un groupe alkylé linéaire ou ramifié à 1 à 6 atomes C, un reste aromatique à 6 à 15 atomes C, substitué par des groupes OH, $NH_2$,-NH-$CH_3$, -$N(CH_3)_2$ ou SH, un reste aralkyle à 7 à 11 atomes C,

- les restes $R^1$ et $R^2$ étant identiques ou différents ou formant ensemble un noyau à 4 à 12 atomes C, dans lequel un ou plusieurs groupes méthylène pouvant être substitués par des chainons pontaux -O-, -S-, -NH-, -CO-, et qui éventuellement, comme substituants, contient liés des restes alkyle linéaires ou ramifiés ayant 1 à 6 atomes C ou des groupes esters carboxyliques et

n est un nombre entier de 3 à 12

et

B) Cocatalyseurs du groupe des

a) amines tertiaires

b) composés métalliques de formule

Me $X_nY_m$ (II)

Me représentant un métal de valence (n + m), et

X étant un reste d'hydrocarbure aliphatique à 1 à 18 atomes de carbone, un reste d'hydrocarbure aromatique à 6 à 10 atomes de carbone ou un reste d'hydrocarbure araliphatique à 7 à 15 atomes de carbone,

Y étant un reste carboxylate aliphatique à 2 à 18 atomes de carbone ou un reste énolate à 5 à 18 atomes de carbone, comportant éventuellement des doubles liaisons oléfiniques et/ou des groupes hydroxyle alcooliques,

n étant un nombre entier compris entre 0 et 2, et

m un nombre entier compris entre 0 et 4, et

C) des acides carboxyliques aliphatiques ayant 2 à 18 atomes C, éventuellement à doubles liaisons insaturés oléfiniquement et/ou groupes hydroxyle ou des mélanges d'au moins 2 des dits cocatalyseurs et on met les composants de départ sous forme de corps moulés par la technique d'injection-réaction.

2.- Procédé selon la revendication 1, caractérisé par le fait que l'on utilise les amidines monocycliques de formule (I) et les composés métalliques (b) de formule (II) ou les acides carboxylique aliphatiques (c) dans un rapport molaire de 0,5 à 5/1.

3.- Procédé selon la revendication 1, caractérisé par le fait que l'on utilise, comme catalyseurs, des mélanges d'amidines monocycliques, d'amines tertiaires (a) et de composés métalliques (b) de formule (II).

4.- Procédé selon la revendication 1, caractérisé par le fait que l'on utilise, comme système catalytique, un mélange constitué par

0,001 à 5,0 parties en poids d'amidine monocyclique,

0,005 à 5,0 parties en poids d'amine tertiaire (a) et

0,001 à 2,5 parties en poids de composé métallique (b) de formule (II) pour 100 parties en poids de polyol.